# EUROPEAN PATENT APPLICATION

(11) **EP 1 543 710 A1**
(43) Date of publication of application: **22.06.2005**
(21) Application number: 04257839.3
(22) Date of filing: 16.12.2004
(51) Int. Cl.: A01B 49/02

(54) **A cultivator/cultivation process**

(30) Priority: 17.12.2003 GB 0329291
(71) Applicant: Baker, Andrew Charles, Creeting St May, Ipswich IP6 8PF (GB)
(72) Inventor: Baker, Andrew Charles, Creeting St May, Ipswich IP6 8PF (GB)
(74) Representative: Copp, David Christopher

(57) **Abstract**

A cultivator 1, which employs a bank of discs 2, and a bank or banks of tines 3, which work in conjunction with each other. Each tine lifts the soil generally between, beneath and against a pair of discs in order to break down soil particle size and create a medium suitable for the sowing of seeds such as a seed bed. The discs can be driven by some mechanical means to further enable and assist the flow of soil passing through, over and beneath part or parts of the cultivator to enhance cultivation.

## Description

This invention relates to a cultivator and or cultivation process for creating seedbeds. Cultivators are well known in agriculture and other industries and have many different configurations. Some have a set of tines and a set of discs, but these two sets are spaced apart and do not function or act directly on or with each other and the discs are not driven.

According to the invention there is provided a cultivator for cultivating the ground, the cultivator comprising a set of rotatable disc-like members on a common axle adapted to run on the ground when the cultivator is in use, the common axle being at right angles to the intended direction of travel of the cultivator, and a set of ground-entering tines arranged between pairs of adjacent disc-like members, the tines having tips to enter the ground and the tips lying between vertical projections of the frontmost and rearmost parts of the circumferences of the disc-like members between which the tines are arranged.

A bank or banks of either discs or rollers or press rings or wheels or other generally circular tools or bodies whether generally flat, cylindrical, concave or convex, smooth edged, serrated, scalloped or of some other profile which can rotate on their axes and which are made of a suitable material or materials, hereafter referred to in this document as a disc or discs, which are either free turning in relation to the forward or reverse motion of the cultivator to which they are connected, or driven by means of mechanical intervention at such a speed to equal plus or minus up to or exceeding twenty per cent of the forward or reverse speed/velocity of the cultivator to which they are connected; and a bank or banks of tines, the open ends, each of which are so positioned to engage the soil or other surface at a point generally both beneath and between each disc which makes up the bank or banks of discs. Both the banks of discs and tines are attached to a framework.

The invention may be towed by a tractor or other suitable vehicle or may be self propelled.

The power/force used to drive the bank or banks of discs may be derived from the vehicle towing the invention or may be provided by a separate power source provided for the purpose (of driving/powering the bank or banks of discs) and the power/force may be transmitted or applied to the disc or discs by any suitable means.

The lateral spacing of the discs and tines may also be adjustable to suit differing operating conditions. For example when a finer seedbed is required and the soil is hard and dry, the disc and tine spacing may be reduced thus reducing the free space available for the soil to pass through and enhancing the action of a greater part of the tine.

Both the discs and the tines used in this invention need to be suitable for the purpose of engaging with all soil types and soil conditions and as there is not one disc or tine which will suit all soil types and conditions these discs and tines or a part or parts of these discs or tines may be removable and or interchangeable with others.

The position of the tines in relation to the bank or banks of discs may be adjustable, both fore and aft and vertically. This may be by mechanical or other means.

The angle and height of the tines in relation to the ground may also be adjustable to increase or decrease their angle or height of engagement into the soil or other surface. This may be done by mechanical means or by the use of differing sets of tines.

The tines may be of any suitable material or profile, and may be rigid, flexible, oscillating, reciprocating or rotating in relation to the framework to which they are attached. The open end of these tines may culminate in points or coulters etc. of various shapes and profiles.

The generally downward force exerted on the bank or banks of discs and the bank or banks of tines may be independently adjustable. This may be achieved by increasing or decreasing the mass/force generally above the bank or banks of discs and the bank or banks of tines

The forward or reverse speed/velocity at which the bank or banks of discs is or are driven may need to vary with the forward or reverse speed/velocity of the vehicle towing the invention or to suit various soil, or other surface, states. This may be done by using a form of variable speed transmission or other variable mechanical means and may be adjusted by operator intervention or by automatic means such as electronic sensors or other means.

The cultivator would preferably have some means of engaging and disengaging with the soil or other surface. This may be by means of an axle and wheels which are able to be raised or lowered or by means of the linkage of the vehicle towing it or by other mechanical means.

The discs and tines may be of one piece construction or made in two or more parts to allow the replacement of the part or parts in contact with the soil rather than the whole disc or tine.

The invention also provides a method of cultivating the ground, the method comprising setting a series of parallel, coaxial disc-like members to run in contact with the ground, and arranging tines between pairs of adjacent disc-like members so that the tines enter the ground between the disc-like members to lift that part of the ground between the disc-like members while the disc-like members hold down that part of the ground on which they are running.

The invention will now be further explained, by way of example, with reference to the accompanying drawings in which:
Figure 1 shows a general view of a cultivator in accordance with the invention.
Figure 2 shows a method of altering the lateral spacing of the discs of a cultivator in accordance with the invention.
Figure 3 is a frontal view of the invention showing the position of a tine in relation to a pair of discs.
Figure 4 is a plan view of the invention showing the position of a tine in relation to a pair of discs.
Figure 5 is a side view of the invention illustrating the action of the tine and disc combination using a rigid tine on uncultivated land.
Figure 6 is a side view of the invention illustrating the action of the tine and disc combination using a flexible tine on cultivated land.
Figure 7 is a side view of the invention show one embodiment of the linkage connecting some of the various parts.

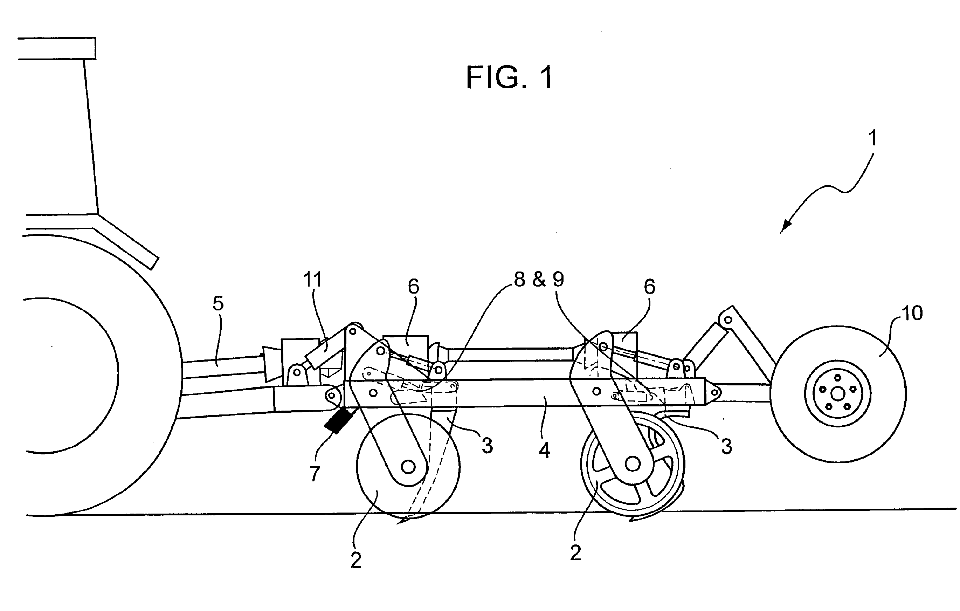

The cultivator 1, shown in Figure 1, shows a generally rectangular framework 4 with a drawbar which connects to the towing vehicle. This towing vehicle also provides the power/turning force required to drive the discs by means of a power take off 5 and variable drive units 6, which in this embodiment are hydraulic pumps which are driving hydraulic motors connected to the axles of the disc banks. The speed of these motors is governed by a ground speed sensor 7, which causes solenoid valves in the hydraulic circuits to adjust the rate of flow of oil to the hydraulic motors. Other methods of transmission may be used to drive the discs, such as a variable pulley system, a selectable speed gearbox, or even a landwheel drive. It is appreciated that this last option would need more draft. The turning force required to drive the discs may also be applied by any other means.

Attached to the framework 4 are the banks of, discs 2 and tines 3. The banks of discs 2 are driven by the vehicle towing the cultivator by means of a power take off 5 and variable speed drive 6 to cause the discs to rotate at a speed similar to that of the towing vehicle (ground speed). In certain instances it may be preferable to drive the discs at a faster or slower speed than the ground speed or to let them rotate naturally with the forward motion of the machine.

The effect of powering these discs is that: soil, surface trash or other material flows between and beneath the discs whilst still allowing the discs to act on the soil etc. in order to create a seedbed; it aids forward momentum of the cultivator and the towing vehicle thus reducing draft and improving traction of the towing vehicle and gaining the benefits thereof; and soil is less likely to adhere to the discs in comparison to free turning, non powered discs.

Different types and combinations of discs, rollers etc. and tines may be fitted to the cultivator. For example, it may be advantageous to fit a bank or banks of heavy discs etc. together with a set of heavy rigid tines to the front of the cultivator framework and a set of rollers etc. together with a set of lighter flexible tines to the rear of the cultivator framework, so that the first combination of discs and tines has the effect of reducing the size of the larger clods or lumps of soil and the second combination of rollers etc and tines further reduces the size of the clods, leaving a seedbed suitable for the sowing of seeds. Many disc/tine combinations are envisaged.

The working depth, relative positioning and forces affecting the front and rear disc/tine assemblies may be varied independently of one another by various linkages 8, and hydraulic rams 9.

The effect of positioning a single tine, or two or more tines, between a driven pair of discs which are exerting downward pressure is that the tine or tines can only pull up clods or particles of soil of a size specified by the operator of the machine by adjusting downward force, the position of the tine in relation to the discs, tine depth, disc speed, disc/tine spacing or by changing the type of tine or disc. In effect, the soil is held firm by the disc while a part or parts of the tine act upon it.

A pivoting axle, hydraulic ram assembly and various pivot points 10 to the rear of the framework, is provided to enable the cultivator to be raised and lowered. The hydraulic rams and various pivot points 11 to the front of the framework, assists in this function. It is envisaged that the banks of discs and tines may also be raised to a vertical position by further hydraulic rams and pivot points to enable transport on public highways and in other instances when and where a lesser transport width is required.

Provision is made for the attachment to the framework 4 of: a levelling board, tines, mouldboards or other cultivating devices to operate in front of the banks of discs and tines; a set or sets of tines, rolls or press rings to operate in front of and or behind the banks of discs and tines; seeding or sowing devices and associated equipment; and other equipment such as ridging or bed forming bodies.

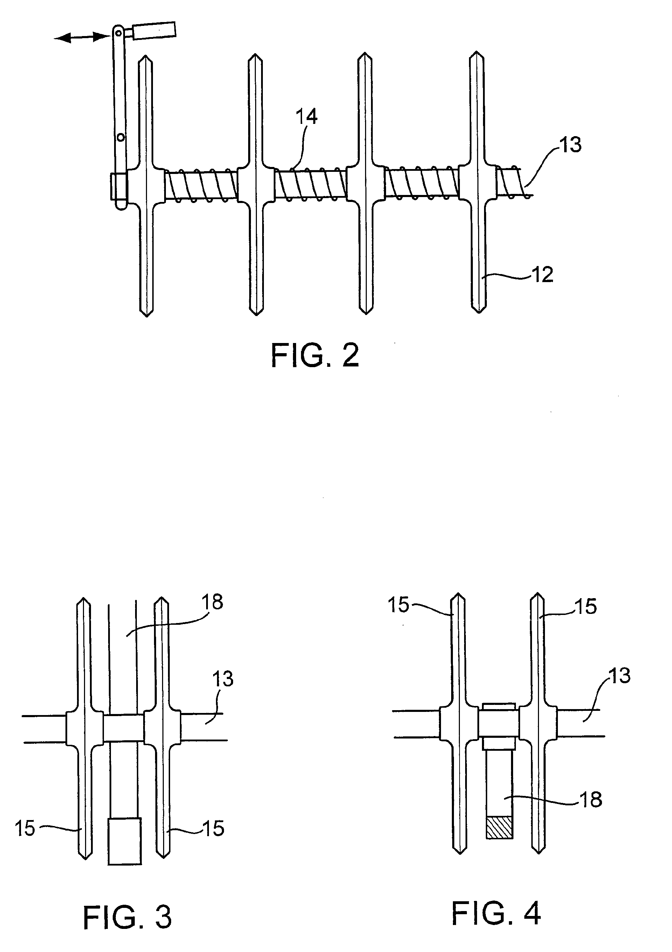

Figure 2 illustrates one method of adjusting disc spacing. This may be achieved by allowing each disc 12 to slide on an axle 13 and fitting a compression device, such as a compression spring 14, on the axle part between each disc. When these springs are compressed by increasing the end force on the outermost disc assembly, it will be appreciated that the disc spacing will be decreased. A similar method may be employed to enable the lateral adjustment of the tine spacing. Lateral spacing of the discs and tines may be adjusted by any other means.

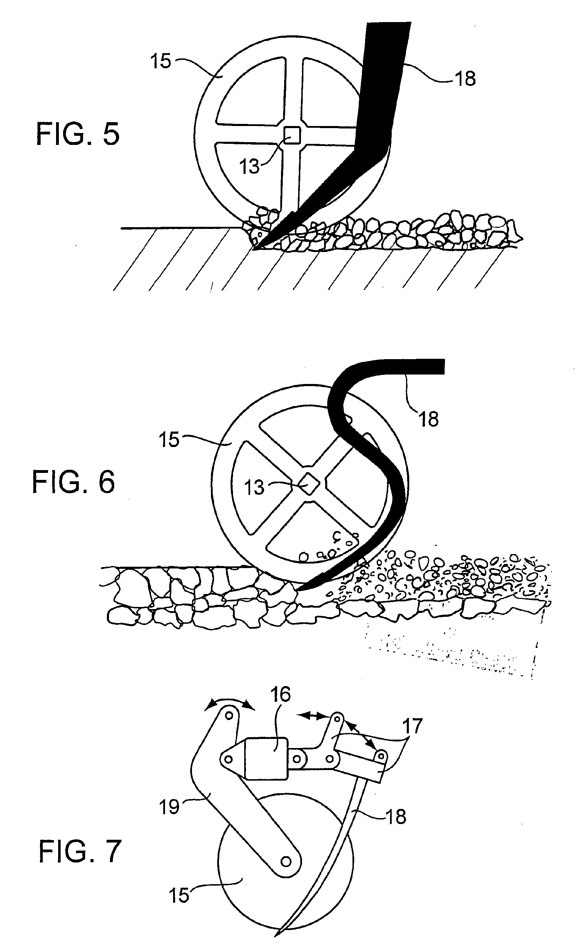

Figure 7 shows a disc 15 connected to a framework 16 by means of a linkage 19 and a tine 18 also connected to a framework 16 by means of an adjustable linkage 17. It will be appreciated that the disc will penetrate or act upon the soil or other surface to create a division in and or of the soil etc. and that the action of the tine will be more or less limited to the area defined by the disc or discs depending on the depth and position of the tines in relation to the discs and the soil surface. As the operating depth of the tine in relation to ground level is adjustable it will also be appreciated that the pressure exerted on the lifted soil between the tine and the disc may be varied. On previously uncultivated land, such as stubble, it is envisaged that: the leading surface of the tines may need to be positioned below the part of the disc which is in contact with the ground; and that more downward pressure will need to be exerted on the discs and tines to increase the penetrative effect of the cultivator. On ploughed land or land previously cultivated in some other way, it is envisaged that: the leading edge of the tines may need to be positioned above the lowest part of the disc which is in contact with the ground; and that less downward pressure will need to be exerted on the discs and tines as less penetration may be required. All these various points are partly illustrated in Figures 3, 4, 5 and 6.

The downward pressure exerted on/by the discs 15and or tines 18 in Figure 7 may be varied by adding ballast to the framework, varying the speed at which the disc is driven or by hydraulic or other means by fulcrum effect.

This would in turn vary the effect the discs and or tines have in relation to the soil or other surface.

## Claims

**1.** A cultivator for cultivating the ground, the cultivator comprising a set of rotatable disc-like members 2,15 on a common axle adapted to run on the ground when the cultivator is in use, the common axle being at right angles to the intended direction of travel of the cultivator, and a set of ground-entering tines 3,18 arranged between pairs of adjacent disc-like members 2,15, the tines having tips to enter the ground, **characterised in that** the tips lie between vertical projections of the frontmost and rearmost parts of the circumferences of the disc-like members 2,15 between which the tines are arranged.

**2.** A cultivator as claimed in Claim 1, wherein the disc-like members 2,15 are driven.

**3.** A cultivator as claimed in Claim 1 or Claim 2, including means 8,9 for exerting an adjustable downward pressure on the disc-like members.

**4.** A cultivator as claimed in any preceding claim, wherein the disc-like members 2 are wheels.

**5.** A cultivator as claimed in any one of Claims 1 to 3, wherein the disc-like members 2 are rollers.

**6.** A cultivator as claimed in any preceding claim, wherein the spacing between the disc-like members is adjustable.

**7.** A cultivator as claimed in any preceding claim, wherein the position of the tines 3,18 in relation to the disc-like members is adjustable.

**8.** A cultivator as claimed in Claim 2, including means for sensing the speed of travel of the cultivator and means for varying the speed at which the disc-like members are driven in relation to the speed of travel.

**10.** A cultivator as claimed in any preceding claim, wherein the tines 3,18 are spring tines.

**11.** A cultivator as claimed in any preceding claim, adapted to be towed behind a powered vehicle.

**12.** A cultivator as claimed in any one of Claims 1 to 10 and being self propelled.

**13.** A cultivator as claimed in any preceding claim, having a plurality of disc/tine sets mounted on parallel, spaced apart axles.

**14.** A cultivator as claimed in any preceding claim, wherein the disc-like members and tines may be raised so as to lift the disc-like members and tines away from the ground.

**15.** A method of cultivating the ground, the method comprising setting a series of parallel, coaxial disc-like members 2,15 to run in contact with the ground, and arranging tines 3,18 between pairs of adjacent disc-like members **characterised in that** the tines 3,18 enter the ground between the disc-like members 2,15 to lift that part of the ground between the disc-like members while the disc-like members hold down that part of the ground on which they are running.
